# EUROPEAN PATENT APPLICATION

(11) **EP 2 487 144 A1**
(43) Date of publication of application: **15.08.2012**
(21) Application number: 10822095.5
(22) Date of filing: 07.10.2010
(51) Int. Cl.: C04B 35/571, C04B 35/573, H01L 21/22

(54) **PROCESS FOR PRODUCTION OF SILICON CARBIDE MOLDED ARTICLE**

(30) Priority: 09.10.2009 JP 2009235762
(71) Applicant: Shin-Etsu Chemical Co., Ltd., Tokyo 100-0004 (JP)
(72) Inventor: AOKI, Yoshitaka, Annaka-shi Gunma 379-0224 (JP)
(74) Representative: Hallybone, Huw George
(86) International application number: PCT/JP2010/067662
(87) International publication number: WO 2011/043425

(57) **Abstract**

A method of producing a silicon carbide molded item is provided. The method includes molding a curable silicone composition comprising a silicon carbide powder or a combination of a silicon carbide powder and a carbon powder into a desired shape, curing the molded curable silicone composition to yield a cured silicone molded item, and then thermally decomposing the cured silicone molded item under a non-oxidizing atmosphere. The method is capable of simply producing a high-purity silicon carbide molded item having a desired shape and dimensions.

## Description

### Technical Field

The present invention relates to a method of producing a silicon carbide molded item.

### Background Art

Silicon carbide ceramics are chemically stable at both normal temperatures and high temperatures, and exhibit excellent mechanical strength at high temperature, and are therefore widely used as high-temperature materials. In recent years, in the field of semiconductor production, high-purity silicon carbide ceramic sintered bodies, which exhibit excellent heat resistance and creep resistance, have started to be used as boards and process tubes and the like within steps for conducting semiconductor wafer heat treatments or the thermal diffusion of trace elements. However, since silicon carbide is usually resistant to sintering, producing a silicon carbide molded item having a desired shape and dimensions is far from simple even when the shape of the item is just a little complicated. Therefore, a production method that is capable of simply processing silicon carbide into a molded item having a desired shape and dimensions is needed.

Furthermore, if the silicon carbide ceramic sintered body used in these steps comprises impurity elements which are harmful for semiconductors, then these impurity elements may be incorporated within the wafer during heating it to cause contamination of the wafer. Accordingly, the silicon carbide ceramic sintered body used in these applications should preferably have as high degree of purity as possible.

Known methods of producing a silicon carbide molded item include a method that uses sintering aids such as boron or the like (see Non-Patent Document 1), a method that brings molten silicon into contact with a molded item composed of mainly silicon carbide and carbon (see Non-Patent Document 1), and a method that impregnates a molded item composed of mainly silicon carbide and carbon with silicon monoxide gas (Patent Document 1). However, in the method that uses sintering aids such as boron or the like, boron or the like turns to be impurities. The disadvantage of the method that includes the contact of molten silicon and the method that includes the impregnation of silicon monoxide is that the methods require special facilities.

### Prior Art Documents

### Patent Documents

Patent Document 1: JP 2007-145665 A

### Non-Patent Document

Non-Patent Document 1: "SiC-based Novel Ceramic Materials", edited by the 124th Committee on High-Temperature Ceramic Materials of the Japan Society for the Promotion of Science.

### Summary of the Invention

### Problems Invention Aims to Solve

An object of the present invention is to address the problems associated with the conventional technologies described above, and provide a production method that is capable of simply producing a silicon carbide molded item having a desired shape and dimensions.

### Means for Solution of the Problems

As a result of intensive investigation aimed at addressing the problems described above, the inventors of the present invention discovered that the above objects could be achieved by thermally decomposing a cured molded item made from a curable silicone composition under a non-oxidizing atmosphere.

In other words, the present invention provides a method of producing a silicon carbide molded item, comprising:
molding a curable silicone composition comprising a silicon carbide powder or
a combination of a silicon carbide powder and a carbon powder into a desired shape;
curing the molded curable silicone composition to yield a cured silicone molded item having the desired shape; and then
thermally decomposing the cured silicone molded item under a non-oxidizing atmosphere.

### Effects of the Invention

Although silicon carbide is usually sintering-resistant, according to the production method of the present invention, a silicon carbide molded item having a desired shape and dimensions can be simply produced by using a cured product of a curable silicone composition comprising the silicon carbide powder or the combination of a silicon carbide powder and a carbon powder.

Furthermore, according to the production method of the present invention, because the starting raw material is a silicone composition, a high-purity silicon carbide molded item can be produced simply by using a high-purity silicone composition as the starting raw material.

### Embodiments of Carrying Out Invention

A more detailed description of the present invention is presented below. In this description, "room temperature" refers to the ambient temperature, which can typically change within a range from 10 to 35°C.

### - Step (1): Molding and Curing of a Curable Silicone Composition-

### - Preparation of the Curable Silicone Composition:

There are no particular restrictions on the types of the curable silicone compositions used as the starting raw material in the method of the present invention, and curable silicone compositions of any curing type can be used. Examples include organic peroxide-curable, radiation-curable, addition-curable, and condensation-curable silicone compositions. From the viewpoint of producing a high-purity product, organic peroxide-curable and radiation-curable silicones are favorable, as the total quantity of impurity elements contained in the produced silicon carbide molded items can be lowered to 1 ppm or less, preferably 0.5 ppm or less, even more preferably 0.1 ppm or less. Specific examples of impurity elements include Fe, Cr, Ni, Al, Ti, Cu, Na, Zn, Ca, Zr, Mg and B, and one or more impurity elements may be present in the molded item. The total quantity of these impurity elements can be lowered as described above.

Examples of the organic peroxide-curable silicone composition include silicone compositions that are cured in the presence of an organic peroxide through radical polymerization of a straight-chain organopolysiloxane having alkenyl groups, such as vinyl groups, at the molecular chain terminals (either at one terminal or both terminals) and/or at non-terminal positions within the molecular chain.

Examples of the radiation-curable silicone composition include ultraviolet-curable or electron beam-curable silicone compositions.

Examples of the ultraviolet-curable silicone composition include silicone compositions that are cured by the energy of ultraviolet rays having a wavelength within a range from 200 to 400 nm. There are no particular restrictions on the curing mechanism for the curable silicone composition. Specific examples of the ultraviolet-curable silicone composition include: an acrylic silicone type silicone composition comprising an organopolysiloxane having an acryl group or a methacryl group and a photopolymerization initiator; a mercapto-vinyl addition polymerization type silicone composition comprising an organopolysiloxane having a mercapto group, an organopolysiloxane having alkenyl groups, such as a vinyl group, and a photopolymerization initiator; an addition reaction type silicone composition that uses the same platinum group metal catalyst as the catalyst of the thermosetting addition reaction type; and a cationic polymerization type silicone composition comprising an organopolysiloxane having an epoxy group and an onium salt catalyst. All these compositions can be used as the ultraviolet-curable silicone composition.

Examples of the useful electron beam-curable silicone composition include any silicone composition that is cured through a radical polymerization initiated by irradiating an organopolysiloxane having radical polymerizable groups with an electron beam.

Examples of the addition-curable silicone composition include silicone compositions that are cured through a reaction (a hydrosilylation addition reaction) between a straight-chain organopolysiloxane having above-mentioned alkenyl groups and an organohydrogenpolysiloxane in the presence of a platinum group metal-based catalyst.

Examples of the condensation-curable silicone composition include silicone compositions that are cured through a reaction between an organopolysiloxane with both terminals blocked with silanol groups, and an organohydrogenpolysiloxane or a hydrolyzable silane such as a tetraalkoxysilane or an organotrialkoxysilane and/or a partial hydrolysis-condensation product thereof, in the presence of a condensation reaction catalyst such as an organotin-based catalyst, or silicone compositions that are cured by reacting organopolysiloxanes with both terminals blocked with trialkoxy groups, dialkoxyorgano groups, trialkoxysiloxyethyl groups or dialkoxyorganosiloxyethyl groups, in the presence of a condensation reaction catalyst such as an organotin-based catalyst.

From the viewpoint of minimizing the incorporation of impurities, radiation-curable and organic peroxide-curable silicone compositions are preferred.

A more detailed description of respective curable silicone compositions is presented below. Each of the curable silicone compositions comprises the components described below, in addition to the silicon carbide powder or the combination of a silicon carbide powder and a carbon powder.

### - Organic peroxide-curable silicone compositions

Specific examples of the organic peroxide-curable silicone composition include organic peroxide-curable silicone compositions comprising:
(a) an organopolysiloxane containing at least two alkenyl groups bonded to silicon atoms,
(b) an organic peroxide, and optionally
(c) an organohydrogenpolysiloxane containing at least two hydrogen atoms bonded to silicon atoms (namely, SiH groups),
wherein the quantity of the hydrogen atoms bonded to silicon atoms contained in the component (c) is within a range from 0.1 to 2 moles, relative to each mole of alkenyl groups contained in the entire curable silicone composition.

### -- Component (a)

The organopolysiloxane of the component (a) is the base polymer of the organic peroxide-curable silicone composition. There are no particular restrictions on the polymerization degree of the component (a), and any organopolysiloxane, such as an organopolysiloxane that is liquid at 25°C or an organopolysiloxane that is gum-like at 25°C etc., can be used as the component (a). However, a favorable organopolysiloxane has an average polymerization degree preferably within a range from 50 to 20,000, more preferably within a range from 100 to 10,000, even more preferably within a range from 100 to 2,000. From the viewpoint of availability of raw materials, the organopolysiloxane of the component (a) is basically either a straight-chain structure with no branching, in which the molecular chain is composed of repeating diorganosiloxane units (R¹₂SiO_{2/2} units) and both terminals are blocked with triorganosiloxy groups (R¹₃SiO_{1/2} units) or hydroxydiorganosiloxy groups ((OH)R¹₂SiO_{1/2} units), or a cyclic structure with no branching in which the molecular chain is composed of repeating diorganosiloxane units, although the structure may also partially include branched structures formed from trifunctional siloxane units and/or SiO₂ units. The definition for R¹ is given in the descriptions about formula (1) described below.

Examples of the component (a) include organopolysiloxanes containing at least two alkenyl groups within a single molecule, represented by an average composition formula (1) shown below:

R¹ₐSiO_{(4-a)/2} (1)

(wherein, R¹'s represent identical or different, substituted or unsubstituted monovalent hydrocarbon group having 1 to 10 carbon atoms, preferably 1 to 8 carbon atoms; 50 to 99 mole% of R¹ are comprised of alkenyl groups; and a is a positive number that is within a range from 1.5 to 2.8, preferably from 1.8 to 2.5, and more preferably from 1.95 to 2.05).

Specific examples of R¹ include alkyl groups such as a methyl group, ethyl group, propyl group, butyl group, pentyl group, or hexyl group; aryl groups such as a phenyl group, tolyl group, xylyl group or naphthyl group; cycloalkyl groups such as a cyclopentyl group or cyclohexyl group; alkenyl groups such as a vinyl group, allyl group, propenyl group, isopropenyl group, or butenyl group; and groups in which a portion of, or all of, the hydrogen atoms within one of the above hydrocarbon groups have been substituted with a halogen atom such as a fluorine atom, bromine atom or chlorine atom, or with a cyano group or the like, such as a chloromethyl group, chloropropyl group, bromoethyl group, trifluoropropyl group or cyanoethyl group. From the viewpoint of high purity, R¹ may preferably consist of hydrocarbon groups only.

In the average composition formula (1), at least two of the R¹ groups are alkenyl groups (and preferably alkenyl groups of 2 to 8 carbon atoms, and even more preferably 2 to 6 carbon atoms). The content of the alkenyl groups is preferably 50 to 99 mole%, more preferably 75 to 95 mole%, based on the total amount of the organic groups bonded to silicon atoms (i.e., the total amount of the substituted or un-substituted monovalent hydrocarbon groups represented by R¹ within the average composition formula (1)). In those cases where the organopolysiloxane of the component (a) has a straight-chain structure, the alkenyl groups may be bonded solely to silicon atoms at the molecular chain terminals, solely to silicon atoms at non-terminal positions within the molecular chain, or may also be bonded to both these types of silicon atoms.

### -- Component (b)

Component (b) is an organic peroxide that is used as a catalyst for promoting a cross-linking reaction of the component (a) included in the organic peroxide-curable organopolysiloxane composition. Any conventional organic peroxides that can promote the cross-linking reaction of the component (a) can be used as the component (b). Specific examples of the component (b) include, but are not limited to, benzoyl peroxide, 2, 4-dichlorobenzoyl peroxide, p-methylbenzoyl peroxide, o-methylbenzoyl peroxide, 2, 4-dicumyl peroxide, 2, 5-dimethyl-bis(2, 5-t-buthylperoxy) hexane, di-t-buthyl peroxide, t-buthyl perbenzoate, or 1, 1-bis(t-buthyl peroxy carboxy) hexane.

The quantity added of the component (b) is an effective quantity as a catalyst for promoting the cross-linking reaction of the component (a). The quantity is preferably within a range from 0.01 to 10 parts by mass, more preferably from 0.2 to 2 parts by mass, per 100 parts by mass of the component (a). If the quantity is less than 0.1 parts by mass per 100 parts by mass of the component (a), then the curing time tends to become longer, which may be economically unviable. In contrast, if the quantity is more than 10 parts by mass per 100 parts by mass of the component (a), then foam formation is caused by the component (b), and furthermore, the strength and the heat resistance of the cured product are adversely affected.

### -- Component (c)

The organohydrogenpolysiloxane of the component (c) is an optional component, and containing at least two (typically 2 to 200), preferably three or more (typically 3 to 100) hydrogen atoms bonded to silicon atoms (namely, SiH groups). Although the component (a) itself can be cured through heating after being mixed with the component (b), when the component (c) is added, the component (a) can be cured at a lower temperature and in shorter period of time compared to the component (a) alone, because the component (c) is easy to react with the component (a). There are no particular restrictions on the molecular structure of the component (c), and conventionally produced chain-like, cyclic, branched, or three dimensional network (resin-like) organohydrogenpolysiloxanes can be used. If the component (c) has a chain-like structure, then the SiH groups may be bonded solely to silicon atoms at the molecular chain terminals, solely to silicon atoms at non-terminal positions within the molecular chain, or may also be bonded to both these types of silicon atoms. Furthermore, the number of silicon atoms within a single molecule (namely, the polymerization degree) is typically within a range from 2 to 300 and is preferably from 4 to 150. An organohydrogenpolysiloxane that is liquid at room temperature (25°C) is particularly favorable as the component (c).

Examples of the component (c) include organohydrogenpolysiloxanes represented by an average composition formula (2) shown below.

R²_{b}H_{c}SiO_{(4-b-c)/2} (2)

(wherein, R²'s represent identical or different, unsubstituted or substituted monovalent hydrocarbon groups having no aliphatic unsaturated linkage, containing from 1 to 10 carbon atoms, and more preferably from 1 to 8 carbon atoms, b and c represent numbers that preferably satisfy 0.7 ≤ b ≤ 2.1, 0.001 ≤ c ≤ 1.0 and 0.8 ≤ b+c ≤ 3.0, and more preferably satisfy 1.0 ≤ b ≤ 2.0, 0.01 ≤ c ≤ 1.0 and 1.5 ≤ b+c ≤ 2.5).
Examples of R² include the same groups as those listed above for R¹ within the above average composition formula (1) (but excluding alkenyl groups).

Specific examples of the organohydrogenpolysiloxanes represented by the above average composition formula (2) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with methylhydrogensiloxy groups, copolymers of methylhydrogensiloxane and dimethylsiloxane with both terminals blocked with methylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with ethylhydrogensiloxy groups, copolymers of methylhydrogensiloxane, methylphenylsiloxane and dimethylsiloxane with both terminals blocked with ethylhydrogensiloxy groups, copolymers composed of (CH₃)₂HSiO_{1/2} units, (CH₃)₂SiO_{2/2} units and SiO_{4/2} units, copolymers composed of (CH₃)₂HSiO_{1/2} units and SiO_{4/2} units, and copolymers composed of (CH₃)₂HSiO_{1/2} units, SiO_{4/2} units, and (C₆H₅)₃SiO_{1/2} units.

The quantity added of the component (c) is preferably 0 to 100 parts by mass, more preferably 0 to 50 parts by mass, per 100 parts by mass of the component (a). If the quantity is more than 100 parts by mass per 100 parts by mass of the component (a), then foam formation is caused by the component (c), and furthermore, the strength and the heat resistance of the cured product are adversely affected.

### --Ultraviolet-curable silicone compositions

Specific examples of suitable ultraviolet-curable silicone compositions include an ultraviolet-curable silicone composition comprising:
(d) an ultraviolet-reactive organopolysiloxane, and
(e) a photopolymerization initiator.

### -- Component (d)

The ultraviolet-reactive organopolysiloxane of the component (d) typically functions as the base polymer of the ultraviolet-curable silicone composition. Although there are no particular restrictions on the component (d), the component (d) is preferably an organopolysiloxane containing at least two, more preferably from 2 to 20, and most preferably from 2 to 10, ultraviolet-reactive groups within each molecule. The plurality of ultraviolet-reactive groups that exist within the organopolysiloxane may be the same or different.

From the viewpoint of availability of raw materials, the organopolysiloxane of the component (d) is basically either a straight-chain structure with no branching, in which the molecular chain (the main chain) is composed of repeating diorganosiloxane units (R¹₂SiO_{2/2} units), and both terminals are blocked with triorganosiloxy groups (R¹₃SiO_{1/2} units), or a cyclic structure with no branching in which the molecular chain is composed of repeating diorganosiloxane units, although the structure may also partially include branched structures formed from trifunctional siloxane units and/or SiO₂ units. In the above formulas, R¹ is the same as defined in formula (1). In those cases where the organopolysiloxane of the component (d) has a straight-chain structure, the ultraviolet-reactive groups may exist solely at the molecular chain terminals, solely at non-terminal positions within the molecular chain, or may also exist at both the molecular chain terminals and the non-terminal positions. Preferably, the ultraviolet-reactive groups exist at least at both terminals.

Examples of the ultraviolet-reactive groups include alkenyl groups such as a vinyl group, allyl group or propenyl group; alkenyloxy groups such as a vinyloxy group, allyloxy group, propenyloxy group or isopropenyloxy group; aliphatic unsaturated groups other than alkenyl groups, such as an acryloyl group or methacryloyl group; as well as an epoxy group or hydrosilyl group, and of these, an acryloyl group, methacryloyl group, mercapto group, epoxy group and hydrosilyl group is preferred, and an acryloyl group and methacryloyl group is particularly desirable.

Although there are no particular restrictions on the viscosity of the organopolysiloxane, the viscosity at 25 °C is preferably within a range from 100 to 1,000,000 mPa·s, more preferably from 200 to 500,000 mPa·s, and is most preferably from 200 to 100,000 mPa·s.

Examples of preferred forms of the component (d) include organopolysiloxanes having at least two ultraviolet-reactive groups represented by either a general formula (3a) shown below:

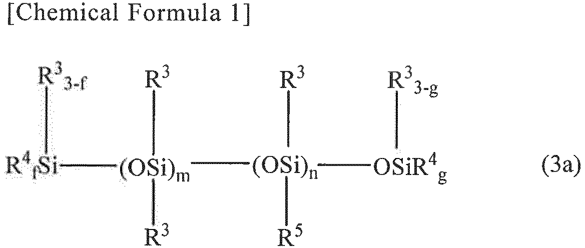

[wherein, R³'s represent identical or different, unsubstituted or substituted monovalent hydrocarbon groups that contain no ultraviolet-reactive groups, R⁴_{'}s represent identical or different groups having ultraviolet-reactive groups, R⁵'s represent identical or different groups having ultraviolet-reactive groups, m represents an integer from 5 to 1,000, n represents an integer from 0 to 100, f represents an integer from 0 to 3, and g represents an integer from 0 to 3, provided that 2≤f+g+n], or
a general formula (3b) shown below:

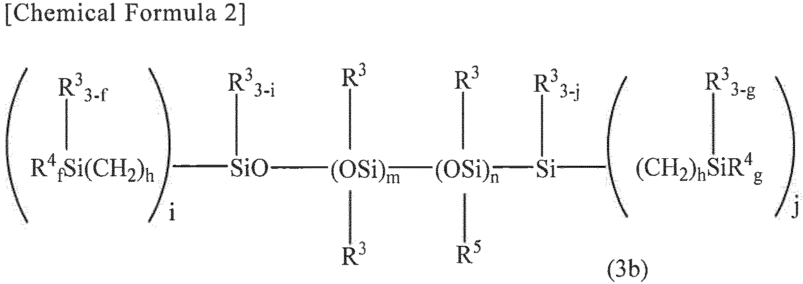

[wherein, R³, R⁴ , R⁵, m, n, f and g are as defined above for the general formula (3a), h represents an integer from 2 to 4, and i and j each represent an integer from 1 to 3, provided that 2≤fi+gj+n].

In the above general formulas (3a) and (3b), R³'s represent identical or different, unsubstituted or substituted monovalent hydrocarbon groups that contain no ultraviolet-reactive groups, and preferably contain from 1 to 20, even more preferably from 1 to 10, and most preferably from 1 to 8 carbon atoms. Examples of the monovalent hydrocarbon groups represented by R³ include alkyl groups such as a methyl group, ethyl group, propyl group, butyl group, pentyl group, or hexyl group; aryl groups such as a phenyl group, tolyl group, xylyl group, or naphthyl group; cycloalkyl groups such as a cyclopentyl group or cyclohexyl group; aralkyl groups such as a benzyl group or phenylethyl group; and groups in which a portion of, or all of, the hydrogen atoms within the above hydrocarbon groups have been substituted with a halogen atom, cyano group, or carboxyl group or the like, including a chloromethyl group, chloropropyl group, bromoethyl group, trifluoropropyl group, cyanoethyl group, and 3-cyanopropyl group, and of these, a methyl group or phenyl group is preferred, and a methyl group is particularly desirable. Furthermore, the monovalent hydrocarbon group represented by R³ may also include one or more sulfonyl groups, ether linkages (-O-) or carbonyl groups or the like within the group skeleton.

In the above general formulas (3a) and (3b), examples of the ultraviolet-reactive groups represented by R⁴ and R⁵ include alkenyl groups such as a vinyl group, allyl group, or propenyl group; alkenyloxy groups such as a vinyloxy group, allyloxy group, propenyloxy group, or isopropenyloxy group; unsaturated aliphatic groups other than alkenyl groups, such as an acryloyl group or methacryloyl group; a mercapto group; an epoxy group; a hydrosilyl group, and of these, an acryloyl group, methacryloyl group, epoxy group or hydrosilyl group is preferred, and an acryloyl group or methacryloyl group is particularly preferred. Therefore, the groups containing an ultraviolet-reactive group represented by R⁴ and R⁵ mean monovalent groups having the ultraviolet-reactive groups as described above, and specific examples of the groups include a vinyl group, allyl group, 3-glycidoxypropyl group, 2-(3,4-epoxycyclohexyl)ethyl group, 3-methacryloxypropyl group,3-acryloxypropyl group, 3-mercaptopropyl group, 2-{bis(2-methacryloxyethoxy)methylsilyl}ethyl group, 2-{bis(2-acryloxyethoxy)methylsilyl}ethyl group, 2-{(2-acryloxyethoxy)dimethylsilyl}ethyl group, 2-{bis(1,3-dimethacryloxy-2-propoxy)methylsilyl}ethyl group, 2-{(1,3-dimethacryloxy-2-propoxy)dimethylsilyl}ethyl group, 2-{bis(1-acryloxy-3-methacryloxy-2-propoxy)methylsilyl} ethyl group, or 2-{bis(1-acryloxy-3-methacryloxy-2-propoxy)dimethylsilyl} ethyl group, and of these, a 3-methacryloxypropyl group, 3-acryloxypropyl group, 2-{bis(2-methacryloxyethoxy)methylsilyl}ethyl group, 2-{bis(2-acryloxyethoxy)methylsilyl}ethyl group, 2-{(2-acryloxyethoxy)dimethylsilyl}ethyl group, 2-{(1,3-dimethacryloxy-2-propoxy)dimethylsilyl}ethyl group, 2-{bis(1-acryloxy-3-methacryloxy-2-propoxy)methylsilyl} ethyl group, or 2-{bis(1-acryloxy-3-methacryloxy-2-propoxy)dimethylsilyl} ethyl group.
R⁴ and R⁵ may be the same or different and individual R⁴ and R⁵ groups may be the same as, or different from, other groups.

In the above general formulas (3a) and (3b), m is typically an integer within a range from 5 to 1,000, preferably from 10 to 800, and more preferably from 50 to 500, n is typically an integer within a range from 0 to 100, preferably from 0 to 50, and more preferably from 0 to 20, f is an integer within a range from 0 to 3, preferably from 0 to 2, and more preferably either 1 or 2, g is an integer within a range from 0 to 3, preferably from 0 to 2, and more preferably either 1 or 2. In the above general formula (3b), h is typically an integer within a range from 2 to 4, preferably either 2 or 3, i and j each represent an integer from 1 to 3, and preferably 1 or 2. Furthermore, as described above, the organopolysiloxanes represented by the above general formulas (3a) and (3b) comprise at least two of the above ultraviolet-reactive groups. Therefore, the value of f+g+n will be equal to or greater than two in the formula (3a), and the value of fi+gj+n will be equal to or greater than two in the formula (3b).

Specific examples of organopolysiloxanes represented by the above formulas (3a) and (3b) include the compounds shown below.

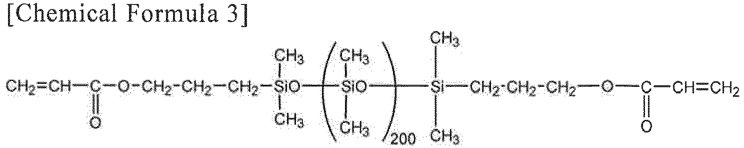

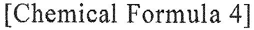

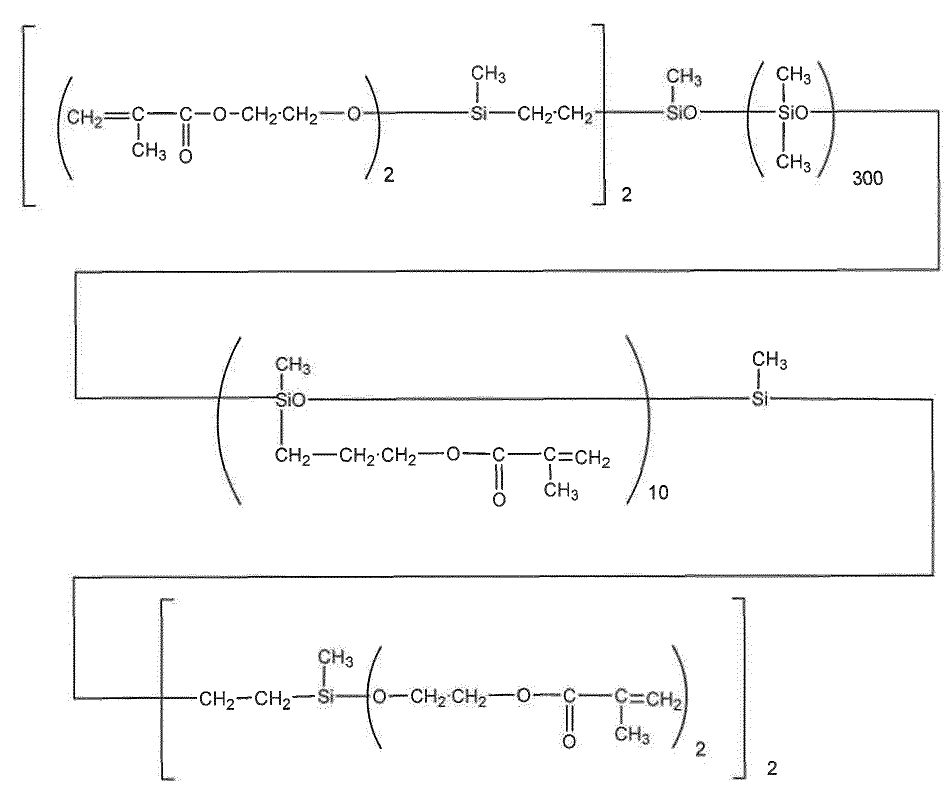

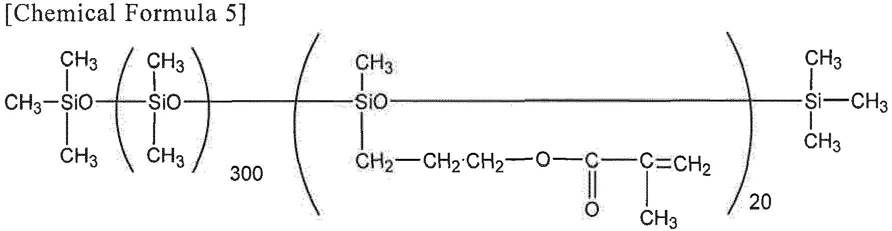

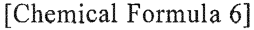

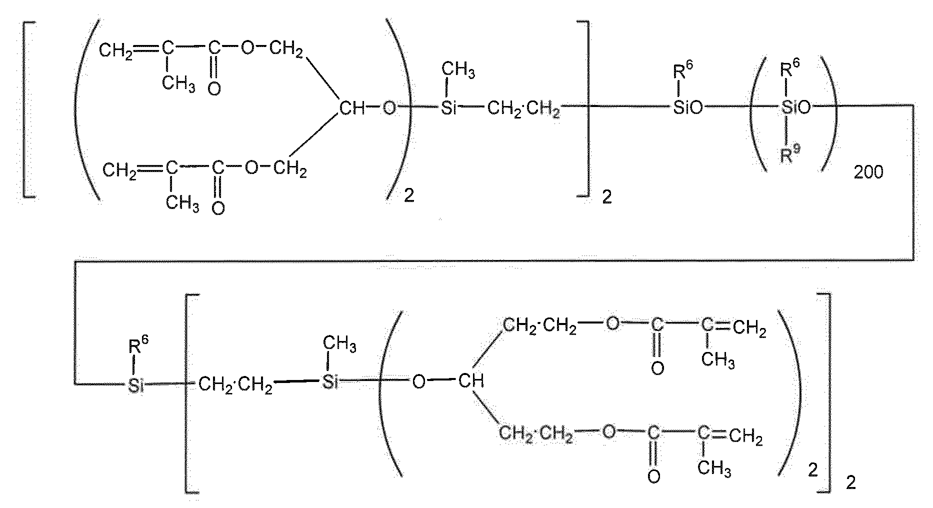

[wherein, R⁶ comprises 90 mol% of methyl groups and 10 mol% of phenyl groups]

### --Component (e)

The photopolymerization initiator of the component (e) has the effect of accelerating the photopolymerization of the ultraviolet-reactive groups within the above component (d). There are no particular restrictions on the component (e), and specific examples of useful initiators include acetophenone, propiophenone, benzophenone, xanthol, fluorein, benzaldehyde, anthraquinone, triphenylamine, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl) ketone, benzyl methoxy acetal, 2-chlorothioxanthone, diethylacetophenone, 1-hydroxychloro phenyl ketone, 1-hydroxycyclohexyl phenyl ketone, 2-methyl-(4-(ethylthio)phenyl)-2-morpholino-1-propane, 2,2-dimethoxy2-phenylacetophenone, diethoxyacetophenone, and 2-hydroxy-2-methyl-1-phenylpropan-1-one, preferred initiators from the viewpoint of purity include benzophenone, 4-methoxyacetophenone, 4-methylbenzophenone, diethoxyacetophenone, 1-hydroxycyclohexyl phenyl ketone, and 2-hydroxy-2-methyl-1-phenylpropan-1-one, and particularly desirable initiators include diethoxyacetophenone, 1-hydroxycyclohexyl phenyl ketone, and 2-hydroxy-2-ethyl-1-phenylpropan-1-one. These photopolymerization initiators may be used either alone, or in combinations of two or more different initiators.

Although there are no particular restrictions on the quantity added of the component (e), the quantity is preferably within a range from 0.01 to 10 parts by mass, even more preferably from 0.1 to 3 parts by mass, and most preferably from 0.5 to 3 parts by mass, per 100 parts by mass of the component (d). Provided the quantity falls within the above range, the curing process of the silicone composition can be readily controlled.

### - Addition-curable Silicone Composition:

Specific examples of the addition-curable silicone compositions include an addition-curable silicone composition comprising,
(f) an organopolysiloxane having at least two alkenyl groups bonded to silicon atoms,
(g) an organohydrogenpolysiloxane having at least two hydrogen atoms bonded to silicon atoms (namely, SiH groups), wherein the quantity of the hydrogen atoms bonded to silicon atoms contained in the component (g) is within a range from 0.1 to 5 moles, relative to each mole of alkenyl groups contained in the entire curable silicone composition, and
(h) an effective quantity of a platinum group metal-based catalyst.

### --Component (f)

The organopolysiloxane of the component (f) is the base polymer of the addition-curable silicone composition, and comprises at least two alkenyl groups bonded to silicon atoms. Conventional organopolysiloxanes may be used as the component (f). The weight average molecular weight of the organopolysiloxane of the component (f), measured by gel permeation chromatography (hereafter abbreviated as "GPC") and referenced against polystyrene standards, is preferably within a range from 3,000 to 300,000. Furthermore, the viscosity at 25°C of the organopolysiloxane of the component (f) is preferably within a range from 100 to 1,000,000 mPa·s, and more preferably from 1,000 to 100,000 mPa·s. If the viscosity is 100 mPa·s or less, spinnability tends to be inferior, and then the production of small-diameter fibers becomes difficult. If the viscosity is 1000,000 mPa·s or more, handling of the material becomes difficult. From the viewpoint of availability of the raw materials, the organopolysiloxane of the component (f) is basically either a straight-chain structure containing no branching in which the molecular chain (the main chain) is composed of repeating diorganosiloxane units (R⁷₂SiO_{2/2} units) and both terminals are blocked with triorganosiloxy groups (R⁷₃SiO_{1/2} units), or a cyclic structure containing no branching in which the molecular chain is composed of repeating diorganosiloxane units, although the structure may also partially include branched structures such as R⁷SiO_{3/2} units or SiO_{4/2} units. The definition for R⁷ is given in the descriptions about the average composition formula (4) described below.

Examples of the component (f) include organopolysiloxanes containing at least two alkenyl groups within a single molecule, represented by an average composition formula (4) shown below:

R⁷₁SiO_{(4-1)/2} (4)

(wherein, R⁷'s represent identical or different, unsubstituted or substituted monovalent hydrocarbon groups, containing from 1 to 10 carbon atoms, and preferably 1 to 8 carbon atoms, 1 is a positive number preferably within a range from 1.5 to 2.8, more preferably from 1.8 to 2.5, and most preferably from 1.95 to 2.05). Examples of R⁷ include the same groups as those listed above for R¹ within the above average composition formula (1).

In the average composition formula (4), at least two of the R⁷ groups are alkenyl groups (especially, alkenyl groups of 2 to 8 carbon atoms, and preferably 2 to 6 carbon atoms). The content of alkenyl groups in R⁷ is preferably 50 to 99 mole%, more preferably 75 to 95 mole%, relative to the entire organic groups (i.e., the total amount of the substituted or un-substituted monovalent hydrocarbon groups represented by R⁷ within the average composition formula (4)) bonded to silicon atoms. In those cases where the organopolysiloxane of the component (f) has a straight-chain structure, the alkenyl groups may be bonded solely to silicon atoms at the molecular chain terminals, solely to silicon atoms at non-terminal positions within the molecular chain, or may also be bonded to both these types of silicon atoms. In terms of achieving a favorable curing rate for the composition and superior physical properties for the cured product, at least one alkenyl group is preferably bonded to a silicon atom at a molecular chain terminal.

### -- Component (g)

The organohydrogenpolysiloxane of the component (g) comprises at least two (typically 2 to 200) hydrogen atoms, preferably at least three (typically 3 to 100) hydrogen atoms bonded to silicon atoms (namely, SiH groups). The component (g) reacts with the component (f) and functions as a cross-linking agent. There are no particular restrictions on the molecular structure of the component (g), and conventionally produced chain-like, cyclic, branched, or three dimensional network (resin-like) organohydrogenpolysiloxanes can be used as the component (g). If the component (g) has a chain-like structure, then the SiH groups may be bonded solely to silicon atoms at the molecular chain terminals, solely to silicon atoms at non-terminal positions within the molecular chain, or may also be bonded to both these types of silicon atoms. Furthermore, the number of silicon atoms within a single molecule (or the degree of polymerization) is typically within a range from 2 to 300 and is preferably from 4 to 150. An organohydrogenpolysiloxane that is liquid at room temperature (25°C) is favorable as the component (g).

Examples of the component (g) include organohydrogenpolysiloxanes represented by an average composition formula (5) shown below:

R⁸ₚH_{q}SiO_{(4-p-q)/2} (5)

(wherein, R⁸'s represent identical or different, unsubstituted or substituted monovalent hydrocarbon groups having no aliphatic unsaturation, containing from 1 to 10 carbon atoms, and preferably from 1 to 8 carbon atoms, p and q represent numbers that preferably satisfy 0.7 ≤ p ≤ 2.1, 0.001 ≤ q ≤ 1.0 and 0.8 ≤ p+q ≤ 3.0, and even more preferably satisfy 1.0 ≤ p ≤ 2.0, 0.01 ≤ q ≤ 1.0 and 1.5 ≤ p+q ≤ 2.5). Examples of R⁸ include the same groups as those listed above for R¹ within the above average composition formula (1) (but excluding alkenyl groups).

Specific examples of organohydrogenpolysiloxanes represented by the above average composition formula (3) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with methylhydrogensiloxy groups, copolymers of methylhydrogensiloxane and dimethylsiloxane with both terminals blocked with methylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with methylhydrogensiloxy groups, copolymers of methylhydrogensiloxane, methylphenylsiloxane and dimethylsiloxane with both terminals blocked with methylhydrogensiloxy groups, copolymers composed of (CH₃)₂HSiO_{1/2} units, (CH₃)₂SiO_{2/2} units and SiO_{4/2} units, copolymers composed of (CH₃)₂HSiO_{1/2} units and SiO_{4/2} units, and copolymers composed of (CH₃)₂HSiO_{1/2} units, SiO_{4/2} units, and (C₆H₅)₃SiO_{1/2} units.

The quantity added of the component (g) must be sufficient that the quantity of SiH groups within this component (g) is within a range from 0.1 to 5.0 moles, preferably from 0.5 to 3.0 moles, and even more preferably from 0.8 to 2.0 moles, relative to one mole of alkenyl groups within the entire curable silicone composition, more specifically relative to one mole of silicon atom-bonded alkenyl groups within the entire curable silicone composition, even more specifically relative to one mole of silicon atom-bonded alkenyl groups within the component (f). The ratio of the silicon atom-bonded alkenyl groups within the component (f) to the alkenyl groups within the entire curable silicone composition is within a range from 80 to 100 mole%, preferably from 90 to 100 mole%. In those cases where only component (f) is present in the entire curable silicone composition as the component having alkenyl groups, the quantity of SiH groups within the component (g) is 0.1 to 5.0 moles, preferably from 0.5 to 3.0 moles, and even more preferably from 0.8 to 2.0 moles, relative to one mole of alkenyl groups within the component (f). If the quantity of the component (g) is such that the above-mentioned quantity for the SiH groups becomes less than 0.1 moles, then the curing time tends to become longer, which may be economically unviable. In contrast, if the quantity of the component (g) is such that the above-mentioned quantity for SiH exceeds 5 mole, then foam formation in the cured product occurs due to a dehydrogenation reaction, and furthermore, the strength and the heat resistance of the cured product are adversely affected.

### -- Component (h)

The platinum group metal-based catalyst of the component (h) is used as a catalyst for accelerating the addition-curing reaction (the hydrosilylation reaction) between the component (f) and the component (g). Conventional platinum group metal-based catalysts can be used as the component (h), although the use of platinum or a platinum compound is preferred. Specific examples of the component (h) include platinum black, platinic chloride, chloroplatinic acid, alcohol-modified products of chloroplatinic acid, complexes of chloroplatinic acid with olefins, aldehydes, vinylsiloxanes or acetylene alcohols.

The quantity added of the component (h) needs only be an effective catalytic quantity, may be suitably increased or decreased in accordance with the desired curing rate, and preferably yields an equivalent mass of the platinum group metal relative to the mass of the component (f) that is within a range from 0.1 to 1,000 ppm, and even more preferably from 0.2 to 100 ppm.

### - Condensation-curable Silicone Compositions

Specific examples of suitable condensation-curable silicone compositions include condensation-curable silicone compositions comprising:
(i) an organopolysiloxane containing at least two silanol groups (namely, silicon atom-bonded hydroxyl groups) or silicon atom-bonded hydrolyzable groups, preferably at both terminals,
(j) a hydrolyzable silane and/or a partial hydrolysis-condensation product thereof as an optional component, and
(k) a condensation reaction catalyst as an optional component.

### -- Component (i)

The component (i) is an organopolysiloxane that contains at least two silanol groups or silicon atom-bonded hydrolyzable groups, and functions as the base polymer of the condensation-curable silicone composition. From the viewpoint of ease of availability of the raw materials, the organopolysiloxane of the component (i) is basically either a straight-chain structure with no branching, in which the molecular chain (the main chain) comprises repeating diorganosiloxane units (R⁹₂SiO_{2/2} units), and both terminals are blocked with triorganosiloxy groups (R⁹₃SO_{1/2} units), or a cyclic structure with no branching in which the molecular chain comprises repeating diorganosiloxane units, although the cyclic structure may also partially include branched structures. R⁹'s represent an unsubstituted or substituted monovalent hydrocarbon group containing from 1 to 10 carbon atoms, and preferably 1 to 8 carbon atoms.

In the organopolysiloxane of the component (i), examples of hydrolyzable groups other than the silanol groups include acyloxy groups such as an acetoxy group, octanoyloxy group, or benzoyloxy group; ketoxime groups (namely, iminoxy groups) such as a dimethyl ketoxime group, methyl ethyl ketoxime group, or diethyl ketoxime group; alkoxy groups such as a methoxy group, ethoxy group, or propoxy group; alkoxyalkoxy groups such as a methoxyethoxy group, ethoxyethoxy group, or methoxypropoxy group; alkenyloxy groups such as a vinyloxy group, isopropenyloxy group, or 1-ethyl-2-methylvinyloxy group; amino groups such as a dimethylamino group, diethylamino group, butylamino group, or cyclohexylamino group; aminoxy groups such as a dimethylaminoxy group or diethylaminoxy group; and amide groups such as an N-methylacetamide group, N-ethylacetamide group, or N-methylbenzamide group.

These hydrolyzable groups are preferably positioned at both terminals of a straight-chain diorganopolysiloxane, preferably in the form of either siloxy groups that contain two or three hydrolyzable groups, or siloxyalkyl groups that contain two or three hydrolyzable groups, including trialkoxysiloxy groups, dialkoxyorganosiloxy groups, triacyloxysiloxy groups, diacyloxyorganosiloxy groups, triiminoxysiloxy groups (namely, triketoximesiloxy groups), diiminoxyorganosiloxy groups, trialkenoxysiloxy groups, dialkenoxyorganosiloxy groups, trialkoxysiloxyethyl groups, and dialkoxyorganosiloxyethyl groups.

Examples of other monovalent hydrocarbon groups bonded to silicon atoms include the same unsubstituted or substituted monovalent hydrocarbon groups as those listed above for R¹ within the above average composition formula (1)

Examples of component (i) include the compounds represented by the general formulas shown below.

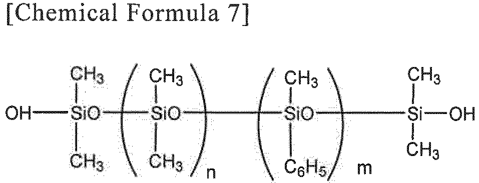

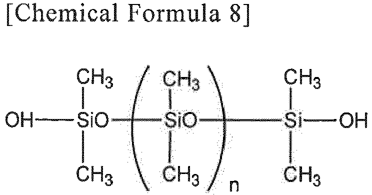

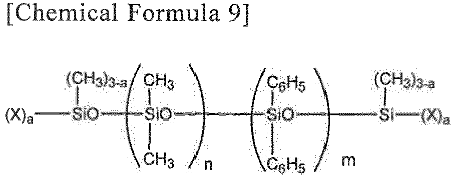

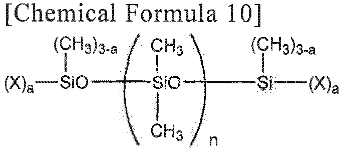

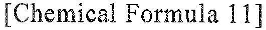

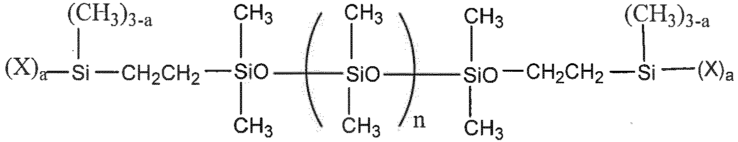

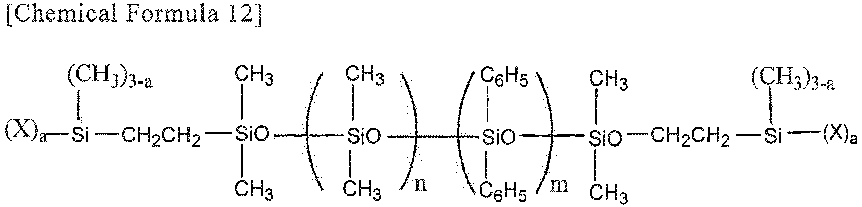

[In the above general formulas, each X represents a hydrolyzable group other than a silanol group, a represents 1, 2, or 3, n and m each represent an integer within a range from 1 to 1,000.]

Specific examples of the component (i) include dimethylpolysiloxane with both terminals blocked with silanol groups, copolymers of dimethylsiloxane and methylphenylsiloxane with both terminals blocked with silanol groups, copolymers of dimethylsiloxane and diphenylpolysiloxane with both terminals blocked with silanol groups, dimethylpolysiloxane with both terminals blocked with trimethoxysiloxy groups, copolymers of dimethylsiloxane and methylphenylsiloxane with both terminals blocked with trimethoxysiloxy groups, copolymers of dimethylsiloxane and diphenylpolysiloxane with both terminals blocked with trimethoxysiloxy groups, and dimethylpolysiloxane with both terminals blocked with 2-trimethoxysiloxyethyl groups. These compounds may be used either alone, or in combinations of two or more different compounds.

### -- Component (j)

The hydrolyzable silane and/or partial hydrolysis-condensation product thereof of the component (j) is an optional component, and functions as a curing agent. In those cases where the base polymer of the component (i) is an organopolysiloxane that contains at least two silicon atom-bonded hydrolyzable groups other than silanol groups within each molecule, the addition of the component (j) to the condensation-curable silicone composition can be omitted. Silanes containing at least three silicon atom-bonded hydrolyzable groups within each molecule and/or partial hydrolysis-condensation products thereof (namely, organopolysiloxanes that still retain at least one, and preferably two or more of the hydrolyzable groups) can be used particularly favorably as the component (j).

Examples of compounds that can be used favorably as the above hydrolyzable silane include compounds represented by a formula (6) shown below:

R¹⁰ᵣSiX₄₋ᵣ (6)

(wherein, R¹⁰ represents an unsubstituted or substituted monovalent hydrocarbon group containing from 1 to 10 carbon atoms, and preferably from 1 to 8 carbon atoms, X represents a hydrolyzable group, and r represents either 0 or 1).
Preferred examples of R¹⁰ include alkyl groups such as a methyl group, ethyl group, propyl group, butyl group, pentyl group or hexyl group; aryl groups such as a phenyl group or tolyl group; and alkenyl groups such as a vinyl group or allyl group.

Specific examples of the component (j) include methyltriethoxysilane, vinyltriethoxysilane, vinyltriacetoxysilane, ethyl orthosilicate, and partial hydrolysis-condensation products of these compounds. These compounds may be used either alone, or in combinations of two or more different compounds.

In those cases where a hydrolyzable silane and/or partial hydrolysis-condensation product thereof of the component (j) is used, the quantity that is added is preferably within a range from 0.01 to 20 parts by mass, and even more preferably from 0.1 to 10 parts by mass, per 100 parts by mass of the component (i). In those cases where a component (j) is used, using a quantity within the above range ensures that the condensation-curable silicone composition exhibits a particularly superior storage stability and curing rate.

### -- Component (k)

The condensation reaction catalyst of the component (k) is an optional component, and need not be used in cases where the above hydrolyzable silane and/or partial hydrolysis-condensation product thereof of the component (j) contains aminoxy groups, amino groups or ketoxime groups or the like. Examples of the condensation reaction catalyst of the component (k) include organotitanate esters such as tetrabutyl titanate and tetraisopropyl titanate; organotitanium chelate compounds such as diisopropoxybis(acetylacetonato)titanium and diisopropoxybis(ethylacetoacetate)titanium; organoaluminum compounds such as aluminum tris(acetylacetonate) and aluminum tris(ethylacetoacetate); organozirconium compounds such as zirconium tetra(acetylacetonate) and zirconium tetrabutyrate; organotin compounds such as dibutyltin dioctoate, dibutyltin dilaurate and dibutyltin (2-ethylhexanoate); metal salts of organic carboxylic acids such as tin naphthenate, tin oleate, tin butyrate, cobalt naphthenate, and zinc stearate; amine compounds or the salts thereof such as hexylamine and dodecylamine phosphate; quaternary ammonium salts such as benzyltriethylammonium acetate; lower fatty acid salts of alkali metals such as potassium acetate and lithium nitrate; dialkylhydroxylamines such as dimethylhydroxylamine and diethylhydroxylamine; and guanidyl group-containing organosilicon compounds. These catalysts may be used either alone, or in combinations of two or more different catalysts.

In those cases where a condensation reaction catalyst of the component (k) is used, although there are no particular restrictions on the quantity added, provided that an effective catalytic quantity is used, the quantity is preferably within a range from 0.01 to 20 parts by mass, and even more preferably from 0.1 to 10 parts by mass, per 100 parts by mass of the component (i). If the component (k) is used, from the viewpoints of curing time and curing temperature, it is economically advantageous that the quantity falls within the above range.

### - Addition of a silicon carbide powder or a combination of a silicon carbide powder and a carbon powder:

Either a silicon carbide powder or a combination of a silicon carbide powder and a carbon powder is included in the curable silicone composition of the present invention.

The average particle size of the silicon carbide powder is preferably within a range from 0.1 µm to 100 µm, and preferably from 1 µm to 50 µm, when measured using a laser diffraction and scattering particle size analyzer. The carbon powder may be amorphous carbon, graphite, or a mixture thereof and preferably has an average particle size of 0.1 µm to 100 µm, and more preferably from 1 µm to 50 µm.

In this description, the "average particle size" refers to the median size, so that if the powder is split into two portions at a specified particle size, with the particles larger than the specified size in one portion and the particles smaller than the specified size in the other portion, then the median size is the particle size at which the mass of the two portions is the same.

Commercially available high-purity silicon carbide powder can be used as the silicon carbide powder. Another useful silicon carbide powder is the one which is produced by heatining a silicone powder, especially a cured product of a radiation-curable or organic peroxide-curable silicon composition, at a temperature in a range from 400°C to 1,500°C so as to be converted to an inorganic ceramic substantially composed of carbon, silicon, and oxygen under a non-oxidizing atmosphere, followed by thermally decomposing at a temperature exceeding 1,500°C but not more than 2,200°C. Commercially available high-purity graphite powder can be used as the carbon powder.

In those cases where only silicon carbide powder is used, since the purity of high-purity silicon carbide powder is generally higher than that of the high-purity graphite powder, a product with a higher purity can be advantageously produced with comparative ease.

When the silicon carbide powder is combined with the carbon powder, the carbon powder will react with silicon monoxide generated from the thermal decomposition of cured silicone to form silicon carbide, by which strong bonding among the silicon carbide particles is formed and the strength of the produced silicon carbide molded item is advantageously improved. The content of the carbon powder is preferably in a range from 0.01 to 20% by volume, more preferably from 0.1 to 10% by volume, based on the total volume of the silicon carbide powder and the carbon powder.

The content of the silicon carbide powder or the combination of a silicon carbide powder and a carbon powder in the mixed curable silicone composition is preferably 5-90% by volume, more preferably 10-80 % by volume, and even more preferably 20-70% by volume. If the content of the powders is not sufficient, the produced silicon carbide molded item tends to be inferior in strength and brittle. If the content of the powders is too much, the powders may not uniformly disperse in the curable silicone composition.

The curable silicone composition containing the silicon carbide powder or the combination of a silicon carbide powder and a carbon powder can be produced by mixing the raw materials using a mixer such as a planetary mixer according to a known production method for each type of curable silicone.

### - Molding and curing of the curable silicone composition

A cured silicone molded item having a desired shape can be produced by molding and curing the curable silicone composition containing the silicon carbide powder or the combination of a silicon carbide powder and a carbon powder. The method of molding and curing as used herein are preferably compression molding, extrusion molding, or injection molding. These methods are described below.

### [Compression molding]

A cured silicone molded item having a desired shape can be produced by filling a mold with a curable silicone composition, placing the mold between heated plates, and curing the composition under pressure. Compression molding is useful for producing a molded item having a complicated shape. After conducting the compression molding at a temperature within a range from 100 to 250°C for 1 to 30 minutes, the pressure is released. The pressure for the compression molding is preferably 10 to 200kgf/cm². Furthermore, secondary curing may be conducted if required, at a temperature within a range from 100 to 250°C for 1 to 10 hours.

### [Extrusion molding]

A cured silicone having a desired shape can be produced by continuously extruding the curable silicone composition through a die of an extruder while rotating a screw in the cylinder of the extuder, and then running the extrudate through a hollow electric air-heating furnace having a length of 1-2 meters, which is disposed next to the die. Extruding molding is useful for the production of rod-like, tube-like, or belt-like elongated articles, such as a tube. The temperature in the electric air-heating furnace is preferably 80-500°C, and more preferably 100-250°C, and the heating time in the air-heating furnace is preferably 1-30 minutes. Furthermore, secondary curing may be conducted if required, at a temperature within a range from 100 to 250°C for 1-10 hours.

### [Injection molding]

A cured silicone having a desired shape can be produced by injecting the curable silicone composition into a heated mold. Injection molding is useful for the production of articles in a variety of shapes, and suitable for a low-mix high-volume production. The temperature of the heated mold is preferably 80-500°C, and more preferably 100-250°C, and the heating time in the mold is preferably 1-30 minutes. Furthermore, secondary curing may be conducted if required, at a temperature within a range from 100 to 250°C for 1-10 hours.

### - Step (2) Conversion to silicon carbide by means of thermal decomposition -

The cured silicone molded item having the desired shape produced in step (1) is subjected to a thermal decomposition under a non-oxidizing atmosphere so as to be converted to an inorganic substance, i.e., silicon carbide.

This heat treatment is conducted under a non-oxidizing atmosphere, preferably under an inert gas atmosphere. Examples of inert gases include nitrogen gas, argon gas, or helium gas, and argon gas is favorable for producing high-purity silicon carbide.

The heat treatment is conducted at a temperature exceeding 1,500°C but not more than 2,200°C. The heating temperature is preferably 1,600°C or higher. Furthermore, the heating temperature is preferably not more than 2,100°C, and is even more preferably 2,000°C or lower.

Preferably, prior to the heat treatment at the temperature described above, another heat treatment at a temperature in a range from 400-1500°C may be conducted. This heat treatment firstly causes cleavage of carbon-hydrogen bonds within the silicone and elimination of hydrogen from the molded item, although the mineralization proceeds without elimination of silicon and carbon. When the temperature exceeds 1,500°C, elimination of carbon monoxide begins, and eventually silicon carbide is formed. If the temperature exceeds 2,200°C, then the level of silicon carbide sublimation becomes overly severe.

Furthermore, the end point of the heat treatment can be specified, for example, as the point where heating of the product at 1,800°C for one hour causes a mass reduction of less than 1% by mass of the silicone composition.

### Examples

A more detailed description of the present invention is presented below based on a series of examples, although the present invention is in no way limited by the examples described below.

### [Example 1]

### Material:

(A) 100 parts by mass of a diorganopolysiloxane containing alkenyl groups within each molecule, represented by the formula shown below;

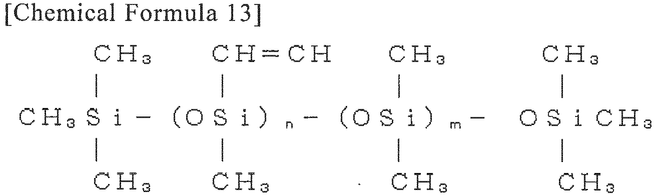

(wherein n and m are numbers that satisfy n/m=4/1 and make the viscosity at 25°C of the diorganopolysiloxane 600 mPa·s).

(B) 0.5 parts by mass of benzoyl peroxide;
(C) 33 parts by mass of a diorganopolysiloxane containing hydrogen atoms bonded to silicon atoms, represented by the formula shown below;

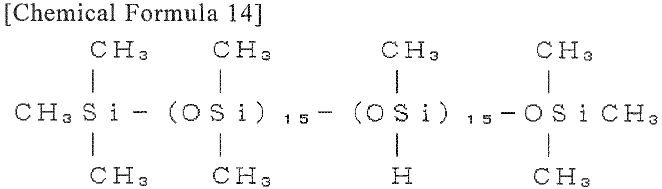

and (D) 327 parts by mass (namely, correspond to 50 % by volume based on the total volume of the silicone composition of the present invention) of a silicon carbide powder (average particle size: 1 µm).

The above components (A) to (D) were placed in a planetary mixer (a registered trademark for a mixing device manufactured by Inoue Manufacturing Co., Ltd.), and were stirred for one hour at room temperature to obtain a curable silicone composition with a viscosity at room temperature of 3,000 mPa·s. The obtained curable silicone composition was cured by compression molding at 150°C for 5 minutes under a pressure of 100 kgf/cm² to yield a sheet-like cured silicone molded item having dimensions of 40 mm long, 40 mm wide, and 2 mm thick.

The cured silicone molded item was placed in an alumina combustion boat that was subsequently placed in an atmosphere furnace, and then the temperature of the furnace was raised from room temperature to 1,000°C over a period of 10-hours at a rate of temperature increase of 100°C/hour under an atmosphere of nitrogen gas. The temperature was then held at 1,000°C for one hour, and subsequently cooled to room temperature at a rate of 200°C/hour. As a result, a black inorganic molded item was obtained. The dimensions of the inorganic molded item were 38.5 mm long, 38.5 mm wide, and 2 mm thick.

Next, the black inorganic molded item was placed in a vessel made of carbon that was subsequently placed in an atmosphere furnace, and under an atmosphere of argon gas, the temperature of the furnace was raised to 2,000°C over a period of 20-hours at a rate of temperature increase of 100°C/hour, then held at 2,000°C for two hours and subsequently cooled to room temperature. As a result, a green silicon carbide molded item was obtained. The dimensions of the inorganic molded item were 38 mm long, 38 mm wide, and 2 mm thick, which were considerably analogous to those of the aforementioned cured silicone molded item. The inorganic molded item maintained the shape of the cured silicone molded item.

### - Analysis on elemental ratio:

Further, when a sample prepared by scraping the surface of the green silicon carbide molded item was subjected to an oxygen analysis using an oxygen analyzer (product name: TC436, manufactured by LECO Corporation), the content of oxygen was found to be 0.2% by mass or less. The elemental ratio of the sample was calculated to be Si₁C_{1.00}.

### - Analysis on impurities:

When a sample prepred by the same manner as described above was subjected to an ICP Emission analysis, the data on the contents of various elements as in Table 1 were obtained. In the Table, the expression "<0.1" means less than 0.1 ppm which is the detection limit.

**[Table 1]**

| Analyzer Element | Measured Value (ppm) |
|---|---|
| Fe | <0.1 |
| Cr | <0.1 |
| Ni | <0.1 |
| Al | <0.1 |
| Ti | 0.1 |
| Cu | <0.1 |
| Na | 0.1 |
| Zn | <0.1 |
| Ca | 0.1 |
| Zr | <0.1 |
| Mg | <0.1 |
| B | <0.1 |

The above results show that the contents of impurities, such as nickel, chrome, iron or aluminium, which may cause problem in the field of semiconductor devices, were less than the detection limit.

### [Example 2]

With the exception of increasing the amount of the component (D) to 594 parts by mass (namely, 65% by volume based on the total volume of the silicone composition of this example), components (A) to (D) were placed in a planetary mixer (a registered trademark for a mixing device manufactured by Inoue Manufacturing Co., Ltd.), and were stirred for one hour at room temperature in the same manner as Example 1 to obtain a curable silicone composition which appeared to be clay-like at room temperature. The curable silicone composition was spplied to an extruder and continuously extruded through a die with a diameter of 20 mm. And then, the extrudate was cut into 10 mm long with a metal wire and subsequently run through a hollow one-meter-long electric air-heating furnace disposed next to the die over a period of 5 minutes at 150°C to yield a cylindrical cured silicone molded item having dimensions of 10 mm long and 20 mm in diameter.

The cured silicone molded item was heated to 1,000°C under a nitrogen atmosphere, and then cooled to room temperature in the same manner as Example 1, to yield a cylindrical black inorganic molded item. The dimensions of the cylindrical inorganic molded item were 10 mm long and 19mm in diameter.

Furthermore, the temperature of the cylindrical inorganic molded item was raised to 2,000°C, heated at 2,000°C, and then cooled under an argon atmosphere in the same manner as Example 1 to obtain a cylindrical green silicon carbide molded item. The silicon carbide molded item had dimensions of 10 mm long and 19mm in diameter, which were considerably analogous to those of the cured silicone molded item. Further, the silicon carbide molded item maintained the shape of the cured silicone molded item.

### [Example 3]

The curable silicone composition obtained in Example 1 was injected into a mold which was heated to 150°C using an injection molding machine, and then held at 150°C for 5 minutes to yield a sheet-like cured silicone molded item having dimensions of 40 mm long, 40 mm wide and 2 mm thick.

The cured silicone molded item was heated to 1,000°C under a nitrogen atmosphere and then cooled in the same manner as Example 1, to yield a sheet-like black inorganic molded item. The dimensions of the sheet-like inorganic molded item were 38.5 mm long, 38.5 mm wide and 2mm thick.

Furthermore, the temperature of the sheet-like inorganic molded item was raised to 2,000°C under an argon atmosphere, heated at 2,000°C, and then cooled in the same manner as Example 1 to produce a green silicon carbide molded item. The silicon carbide molded item had dimensions of 38 mm long, 38 mm wide and 2mm thick, which were considerably analogous to those of the cured silicone molded item. Further, the silicon carbide molded item maintained the shape of the cured silicone molded item.

### [Example 4]

With the exception of replacing the component (D) used in Example 1 with
(D-1) 288 parts by mass (namely, corresponds to 45 % by volume based on the total volume of the silicone composition of this example) of silicon carbide powder (average particle size: 1 µm), and
(D-2) 18 parts by mass (namely, corresponds to 5 % by volume based on the total volume of the silicone composition of this example) of carbon black (average particle size: 1 µm),
components (A) , (B), (C), (D-1) and (D-2) were placed in a planetary mixer (a registered trademark for a mixing device manufactured by Inoue Manufacturing Co., Ltd.), and stirred for one hour at room temperature in the same manner as Example 1 to obtain a curable silicone composition which appeared to be clay-like at room temperature. The curable silicone composition was supplied to an extruder and continuously extruded through a die with a diameter of 20 mm. And then, the extrudate was cut into 10 mm long with a metal wire and subsequently run through a hollow one-meter-long electric air-heating furnace disposed next to the die over a period of 5 minutes at 150°C to yield a cylindrical cured silicone molded item having dimensions of 20 mm long and 20 mm in diameter.

The cured silicone molded item was heated to 1,000°C under a nitrogen atmosphere and then cooled in the same manner as Example 1 to yield a black inorganic molded item. The dimensions of the inorganic molded item were 9.8 mm long and 19.5mm in diameter.

Furthermore, the temperature of the inorganic molded item was raised to 2,000°C, heated at 2,000°C, and then cooled in the same manner as Example 1 to produce a green silicon carbide molded item. The silicon carbide molded item had dimensions of 9.5 mm long and 19.0 mm in diameter, which were considerably analogous to those of the cured silicone molded item. The silicon carbide molded item maintained the shape of the cured silicone molded item.

### - Analysis on elemental ratio:

When the silicon carbide molded item was subjected to an oxygen analysis in the same manner as Example 1, the content of oxygen was found to be 0.2% by mass or less. The elemental ratio in the silicon carbide molded item was calculated to be Si₁C_{1.00}.

### - Analysis on impurities:

When the silicon carbide molded item was analyzed on various elements in the same manner as Example 1, the results as in Table 2 were obtained. In the Table, the expression "<0.1" means less than 0.1 ppm which is the detection limit.

**[Table 2]**

| Analyzed Element | Measured Value (ppm) |
|---|---|
| Fe | <0.1 |
| Cr | <0.1 |
| Ni | <0.1 |
| Al | <0.1 |
| Ti | 0.1 |
| Cu | <0.1 |
| Na | 0.1 |
| Zn | <0.1 |
| Ca | 0.1 |
| Zr | <0.1 |
| Mg | <0.1 |
| B | <0.1 |

The above results show that the contents of impurities, such as nickel, chrome, iron and aluminium, which may cause problem in the field of semiconductor devices, were less than the detection limit.

### [Comparative Example 1]

With the exception of omitting the component (D), components (A) to (C) were placed in a planetary mixer (a registered trademark for a mixing device manufactured by Inoue Manufacturing Co., Ltd.), and stirred for one hour at room temperature in the same manner as Example 1 to obtain a curable silicone composition which had a viscosity of 100 mPa·s at room temperature. The curable silicone composition was cured using a compression molding, machine at a temperature of 150°C and a pressure of 100 kgf/cm² for 5 minutes to yield a cured silicone molded item having dimensions of 40 long, 40 mm wide, and 2 mm thick.

The cured silicone molded item was heated to 1,000°C under a nitrogen atmosphere and then cooled in the same manner as Example 1 to yield a black inorganic molded item. The dimensions of the inorganic molded item were 27.0 mm long, 27.0 mm wide, and 1.8 mm thick.
Furthermore, when the temperature of the inorganic molded item was raised to 2,000°C, heated at 2,000°C, and then cooled under an argon atmosphere in the same manner as Example 1, the inorganic molded item turned to be a brittle powder form, and no longer maintained a sheet-like shape.

### Industrial Applicability

The silicon carbide molded item of the present invention is useful, for example in the field of semiconductor device production, for boards or process tubes and the like which are used within steps for conducting semiconductor wafer heat treatments or thermal diffusion of trace elements into a semiconductor wafer.

## Claims

1. A method of producing a silicon carbide molded item, comprising:
molding a curable silicone composition comprising a silicon carbide powder or a combination of a silicon carbide powder and a carbon powder into a desired shape;
curing the molded curable silicone composition to yield a cured silicone molded item having the desired shape; and then thermally decomposing the cured silicone molded item under a non-oxidizing atmosphere.

2. The method according to claim 1, wherein the curable silicone composition is an organic peroxide-curable silicone composition, a radiation-curable silicone composition, an addition-curable silicone composition, or a condensation-curable silicone composition.

3. The method according to claim 1, wherein the curable silicone composition is an organic peroxide-curable silicone composition or a radiation-curable silicone composition.

4. The method according to claim 1, wherein the curable silicone composition is molded into the desired shape by using compression molding, extrusion molding, or injection molding.

5. The method according to claim 1, wherein the curable silicone composition contains 5 to 90% by volume of the silicon carbide powder or the combination of a silicon carbide powder and a carbon powder.

6. The method according to claim 1, wherein the curable silicone composition contains the combination of a silicon carbide powder and a carbon powder, and the content of the carbon powder is in a range from 0.01 to 20% by volume based on the total volume of the silicon carbide powder and the carbon powder.

7. The method according to claim 1, wherein the curable silicone composition is an organic peroxide-curable silicone composition comprising, in addition to the silicon carbide powder or the combination of a silicon carbide powder and a carbon powder:
(a) an organopolysiloxane containing at least two alkenyl groups bonded to silicon atoms;
(b) an organic peroxide; and optionally
(c) an organohydrogenpolysiloxane containing at least two hydrogen atoms bonded to silicon atoms,
wherein the quantity of the hydrogen atoms bonded to silicon atoms contained in the component (c) is within a range from 0.1 to 2 moles, relative to each mol of alkenyl groups contained in the curable silicone composition.

8. The method according to claim 1, wherein the curable silicone composition is an ultraviolet-curable silicone composition containing, in addition to the silicon carbide powder or the combination of a silicon carbide powder and a carbon powder,
(d) an ultraviolet-reactive organopolysiloxane, and
(e) a photopolymerization initiator.

9. The method according to claim 8, wherein the component (d) is an ultraviolet-reactive organopolysiloxane having at least two ultraviolet-reactive groups represented by a general formula (3a): 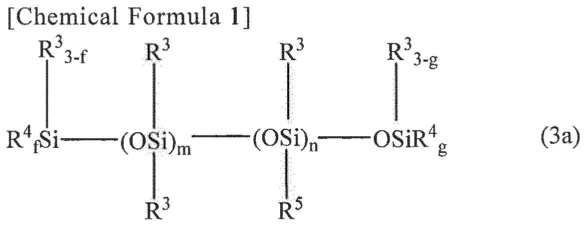 [wherein, R³'s represent identical or different, unsubstituted or substituted monovalent hydrocarbon groups having no ultraviolet-reactive groups, R⁴'s represent identical or different groups having an ultraviolet-reactive group, R⁵'s represent identical or different groups having an ultraviolet-reactive group, m represents an integer from 5 to 1,000, n represents an integer from 0 to 100, f represents an integer from 0 to 3, and g represents an integer from 0 to 3,
provided that 2≤f+g+n].

10. The method according to claim 9, wherein the ultraviolet-reactive group is selected from the group consisting of alkenyl groups, alkenyloxy groups, acryloyl groups, methacryloyl groups, mercapto groups, epoxy groups, and hydrosilyl groups.

11. The method according to claim 8, wherein the component (d) is an ultraviolet-reactive organopolysiloxane having at least two ultraviolet-reactive groups represented by a general formula (3b): 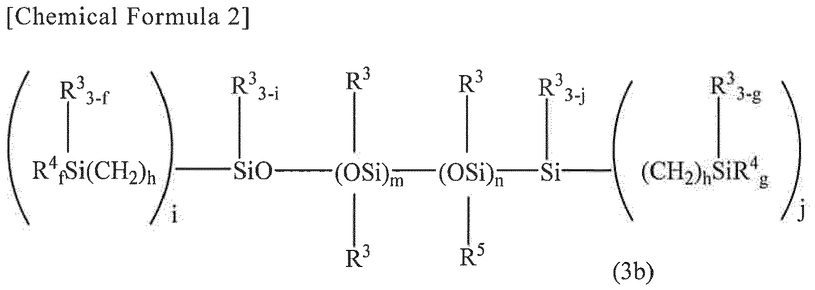 [wherein, R³'s represent identical or different, unsubstituted or substituted monovalent hydrocarbon groups having no ultraviolet-reactive groups, R⁴'s represent identical or different groups having ultraviolet-reactive groups, R⁵'s represent identical or different groups having ultraviolet-reactive groups, m represents an integer from 5 to 1,000, n represents an integer from 0 to 100, f represents an integer from 0 to 3, g represents an integer from 0 to 3, h represents an integer from 2 to 4, and i and j each represent an integer from 1 to 3, provided that 2≤fi+gj+n].

12. The method according to claim 11, wherein the ultraviolet-reactive group is selected from the group consisting of alkenyl groups, alkenyloxy groups, acryloyl groups, methacryloyl groups, mercapto groups, epoxy groups, and hydrosilyl groups.

13. The method according to claim 8, wherein the quantity of the component (e) is within a range from 0.01 to 10 parts by mass per 100 parts by mass of the component (d).

14. The method according to claim 1, wherein the curable silicone composition is an addition-curable silicone composition comprising, in addition to the silicon carbide powder or the combination of a silicon carbide powder and a carbon powder:
(f) an organopolysiloxane having at least two alkenyl groups bonded to silicon atoms;
(g) an organohydrogenpolysiloxane having at least two hydrogen atoms bonded to silicon atoms, wherein the quantity of the hydrogen atoms bonded to silicon atoms contained in the component (g) is within a range from 0.1 to 5 moles, relative to each mole of alkenyl groups contained in the curable silicone composition; and
(h) an effective quantity of a platinum group metal-based catalyst.

15. The method according to claim 1, wherein the curable silicone composition is a condensation-curable silicone composition comprising, in addition to the silicon carbide powder or the combination of a silicon carbide powder and a carbon powder:
(i) an organopolysiloxane containing at least two silanol groups or silicon atom-bonded hydrolyzable groups;
(j) a hydrolyzable silane or a partial hydrolysis-condensation product thereof or a combination thereof as an optional component, and
(k) a condensation reaction catalyst as an optional component.

16. The method according to claim 1, wherein the non-oxidizing atmosphere is an atmosphere of argon gas.

17. The method according to claim 1, wherein the cured silicone molded item is thermally decomposed at a temperature exceeding 1,500°C but not more than 2,200°C.

18. The method according to claim 1, wherein the cured silicone molded item is subjected to a heat treatment at a temperature in a range from 400°C to 1,500°C before being thermally decomposed.

19. A silicon carbide molded item produced by the method of claim 1.
